# EUROPÄISCHE PATENTSCHRIFT

(11) **EP 0 433 668 B1**
(45) Veröffentlichungstag und Bekanntmachung des Hinweises auf die Patenterteilung: **04.05.1994**
(21) Anmeldenummer: 90121927.9
(22) Anmeldetag: 16.11.1990
(51) Int. Cl.: G01L 5/28, G01M 17/00, G01L 5/13

(54) **Rollenprüfstand zur kombinierten Leistungs- und Bremsenprüfung an Kraftfahrzeugen**
Roller type test stand for combined testing of power and brakes of motor vehicles
Banc d'essai à rouleaux pour le test combiné de la puissance et des freins des véhicules à moteur

(30) Priorität: 20.12.1989 DE 3942056
(43) Veröffentlichungstag der Anmeldung: 26.06.1991
(73) Patentinhaber: ROBERT BOSCH GMBH, 70442 Stuttgart (DE)
(72) Erfinder: Hauck, Franz, Ing. (grad.), W-7306 Denkendorf (DE); Höckel, Herbert, Dipl.-Ing. (FH), W-7313 Reichenbach (DE); Poppel, Joachim, W-7322 Donzdorf 2 (DE); Paprotta, Frank, W-7316 Köngen (DE)

(56) Entgegenhaltungen:
- DE-A- 2 735 925
- DE-B- 1 473 395
- DE-B- 2 540 514
- DE-C- 2 450 494

## Beschreibung

### Stand der Technik

Die Erfindung geht aus von einem Rollenprüfstand zur kombinierten Leistungs- und Bremsenprüfung nach der Gattung des Hauptanspruchs.

Es ist schon ein solcher Rollenprüfstand zur kombinierten Leistungs- und Bremsenprüfung aus der DE-OS 27 35 925 bekannt, der mit zwei Rollenpaaren arbeitet, auf denen sich die Räder einer Achse des zu prüfenden Kraftfahrzeugs abstützen. Dabei können neben Leistungs- und Bremswerten auch zusätzliche Parameter ermittelt werden, wozu jedes Rollenpaar eine Schwungmasse aufweist, Drehzahl-Sensoren, ein Motoraggregat zum Antrieb und die jeweils ersten Laufrollen beider Rollenpaare miteinander kuppelbar sind. Von Nachteil bei diesem Rollenprüfstand ist nun, daß zwei Motoraggregate über jeweils ein Getriebe die zweiten Laufrollen antreiben, die über Keilriemen zwangsweise mit den ersten Laufrollen gekoppelt sind. Ferner ist zur Ermittlung der Radgeschwindigkeit bzw. des Schlupfes jedem Rollenpaar eine gesonderte Prüfrolle zugeordnet, die zwischen den beiden Laufrollen angeordnet ist. Dieser Rollenprüfstand baut daher relativ aufwendig. Ferner fehlt eine Bremseinrichtung, weshalb manche Prüfungen schlecht bzw. gar nicht durchführbar sind.

Ferner ist aus der DE-OS 14 73 395 ein Rollenprüfstand für eine kombinierte Leistungs- und Bremsenprüfung an Kraftfahrzeugen bekannt, der ebenfalls zwei Rollenpaare aufweist. Dabei sind die ersten Laufrollen, denen jeweils ein Drehmoment-Sensor zugeordnet ist, miteinander und mit einem Antriebsmotor unlösbar verbunden. Die beiden zwei- ten Laufrollen sind durch zwei Kupplungen voneinander und von einem gemeinsamen Leistungsmeßgerät trennbar. Dieser Rollenprüfstand hat keine Schwungmassen, benutzt teure Torsionswellen und hat fernerhin keine Drehzahl-Sensoren, so daß er nur begrenzt einsatzfähig ist, in-dem er zum Beispiel keine dynamische Leistungsmessung ermöglicht.

Weiterhin ist aus der DE-PS 24 50 494 ein Rollenprüfstand zur kombinierten Leistungs- und Bremsenprüfung bekannt, bei dem in einer Achse der beiden Rollenpaare ein Schwungrad ankoppelbar ist. Hier sind zwar den Laufrollen mehrere Drehzahl-Sensoren zugeordnet, so daß die Überprüfung eines Antiblockiersystems (ABS) möglich ist. Nachteilig ist jedoch, daß auch dieser Rollenprüfstand nur einen begrenzten Einsatzbereich hat.

### Vorteile der Erfindung

Der erfindungsgemäße Rollenprüfstand zur kombinierten Leistungs- und Bremsenprüfung mit den Merkmalen des Hauptanspruchs hat demgegenüber den Vorteil, daß mit ihm bei relativ geringem Aufwand eine Vielzahl von Prüffunktionen durchführbar ist, wobei insbesondere neben einer dynamischen Rad-Motor-Leistungsmessung eine Bremskraftmessung durchführbar ist, bei der auch Systeme mit automatischem Blockierverhinderer (ABV) und mit Antiblockierschutz (ABS) prüfbar sind und mit dem darüber hinaus auch Abgas-Sonderuntersuchungen und Diesel-Sonderuntersuchungen durchführbar sind. Ferner können auch Messungen über eine Abbremsung ausgeführt werden. Alle diese Anforderungen lassen sich mit einem einzigen dynamischen Leistungsprüfstand sinnvoll und einfach erfüllen.

Durch die in den abhängigen Ansprüchen aufgeführten Maßnahmen sind vorteilhafte Weiterbildung und Verbesserungen des im unabhängigen Anspruch angegebenen Rollenprüfstands möglich. Dabei können in besonders vorteilhafter Weise mit diesem Rollenprüfstand die Verfahren nach den Ansprüchen 7 bis 13 durchgeführt werden.

### Zeichnung

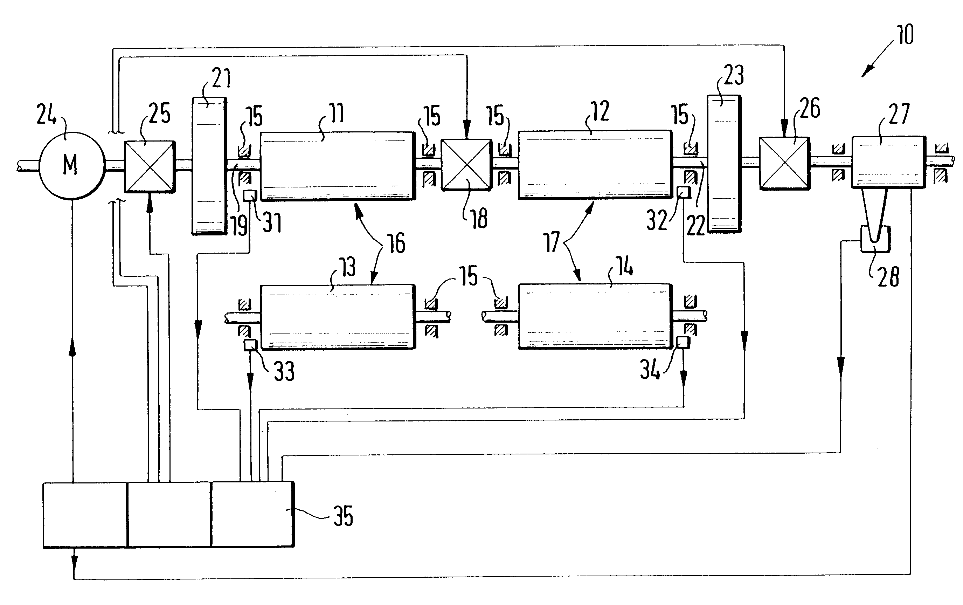

Ein Ausführungsbeispiel der Erfindung ist in der Zeichnung dargestellt und in der nachfolgenden Beschreibung näher erläutert. Die einzige Figur zeigt in vereinfachter Darstellung eine Draufsicht auf einen dynamisch arbeitenden Rollenprüfstand zur kombinierten Leistungs- und Bremsenprüfung an Kraftfahrzeugen.

### Beschreibung des Ausführungsbeispiels

Die einzige Figur zeigt in vereinfachter Darstellung einen Rollenprüfstand 10, bei dem vier Laufrollen 11, 12, 13, 14 mit Hilfe von Lagern 15 parallel zueinander angeordnet sind. Dabei bilden die Laufrollen 11 und 13 ein erstes Laufrollenpaar 16, die Laufrollen 12 und 14 ein zweites Laufrollenpaar 17, auf denen sich die nicht näher gezeichneten Räder einer Achse eines zu prüfenden Kraftfahrzeugs in an sich bekannter Weise abstützen. Zwischen den koaxial zueinanderliegenden, jeweils ersten Laurollen 11 und 12 beider Laufrollenpaare 16, 17 ist eine erste, schaltbare Kupplung 18 angeordnet, so daß die beiden ersten Laufrollen 11 und 12 miteinander gekoppelt oder getrennt voneinander betrieben werden können. Außerhalb der Lager 15 ist die Laufrolle 11 über ihre Welle 19 starr mit einer ersten Schwungmasse 21 verbunden, die hier einfachheitshalber als Schwungrad dargestellt ist und selbstverständlich je nach den Gegebenheiten auch mit der Laufrolle 11 integriert werden kann. In entsprechender Weise ist die Laufrolle 12 über ihre Welle 22 mit einer zweiten Schwungmasse 23 starr verbunden. Die Welle 19 mit der ersten Schwungmasse 21 ist von einem Motoraggregat 24 über eine zweite, schaltbare Kupplung 25 wahlweise antreibbar. Auf der anderen Seite des Rollensatzes ist die Welle 22 mit ihrer gekoppelten zweiten Schwungmasse 23 über eine dritte, schaltbare Kupplung 26 an eine Bremseinrichtung 27 anschließbar, die zugleich als Drehmoment-Meßeinrichtung 28 ausgebildet ist.

Jeder der Laufrollen 11 bis 14 ist ein eigener Drehzahlsensor 31, 32, 33 bzw. 34 zugeordnet, welche ihre geschwindigkeitsabhängigen Drehzahlsignale an ein Steuergerät 35 melden. Das Steuergerät 35, das insbesondere als elektrisches und/oder elektronisches Gerät ausgebildet werden kann, weist zudem geeignete Mittel auf, um die drei schaltbaren Kupplungen 18, 25 und 26 anzusteuern. Dabei kann deren Betätigung in beliebiger Weise elektrisch, pneumatisch, hydraulisch oder mechanisch erfolgen. Ferner erhält das Steuergerät 35 auch die von der Drehmoment-Meßeinrichtung 28 ermittelten Signale und kann fernerhin die Bremseinrichtung 27 steuern. Fernerhin wird vom Steuergerät 35 auch das Motoraggregat 24 angesteuert, wobei letzteres in vorteilhafter Weise auch so ausgebildet sein kann, daß das Motoraggregat 24 darüber hinaus auch als Generator arbeiten kann. Das Steuergerät 34 enthält zu diesem Zweck geeignete Meß- und Aufzeichnungsgeräte sowie geeignete Mittel zum Auswerten und Verarbeiten von Signalen und zum Erzeugen geeigneter Steuersignale.

Mit dem vorliegenden Rollenprüfstand 10 lassen sich eine Reihe von Prüfmöglichkeiten durchführen, wobei deren grundsätzliches Funktionsprinzip, wie es bisher mit Hilfe von Einzelprüfständen durchgeführt wurde, als an sich bekannt vorausgesetzt wird. Im einzelnen sind folgende Prüfungen durchführbar:
1. Dynamische Motor-Rad-Leistungsmessung:
   Bei dieser dynamischen Leistungsmessung wird nach einem Meßprinzip verfahren, wie es bei vorhandenen Rollenprüfständen, zum Beispiel nach der DE-AS 25 40 514 bekannt ist. Bei diesem Meßprinzip wird aus den von den Drehzahlsensoren 31 bis 34 gemessenen, geschwindigkeitsabhängigen Signalen durch Differenzieren ein Beschleunigungswert ermittelt, aus dem im Zusammenhang mit den beschleunigten Schwungmassen 21, 23 eine Antriebskraft herleitbar ist, aus der unter Berücksichtigung der Geschwindigkeit rechnerisch die jeweilige Leistung ermittelt werden kann. Dieser Prüfvorgang ist nur mit der angetriebenen Achse erforderlich, wobei in dem Rollenprüfstand 10 die Funktionen der Laufrollen 11 bis 14 mit ihren zugehörigen Drehzahlsensoren 31 bis 34, der Schwungmassen 21 und 23 und der ersten Kupplung 18 benutzt werden. Motoraggregat 24 und Bremseinrichtung 27 sind dabei mit Hilfe der zweiten (25) bzw. dritten Kupplung 26 abgeschaltet. Bei dieser Prüfungsart ist eine Messung an der nicht angetriebenen Achse und der Feststellbremse nicht erforderlich.
2. Statische Radleistungsmessung:
   Bei dieser Prüfungsart wird nach einem Meßprinzip verfahren, das ebenfalls an sich bekannt ist. Bei diesem Meßprinzip rollen die Räder der angetriebenen Achse auf den Laufrollenpaaren 16 bzw. 17 ab, wobei beim Betätigen der Bremseinrichtung 27 von der Meßeinrichtung 28 das jeweilige Drehmoment ermittelt wird, aus dem das Steuergerät 35 im Zusammenhang mit der jeweiligen Geschwindigkeit die Leistung ermittelt. Bei dieser Prüfung sind wie unter Punkt 1. genannt alle Laufrollen 11 bis 14 sowie die erste Kupplung 18 in Funktion, wobei zusätzlich über die dritte Kupplung 26 die Bremseinrichtung 27 angekoppelt ist. Die zweite Kupplung 25 ist dabei nicht betätigt und somit auch das Motoraggregat 24 außer Funktion. Diese statische Radleistungsmessung ist nur für die Antriebsachse erforderlich.
3. Prüfung bremsspezifischer Werte:
   Darunter zu verstehen ist eine Verzögerungsmessung in Meter/Sekunde², eine Bremskraftmessung in Newton, sowie eine Bremsleistungsmessung in Kilowatt. Ferner erstreckt sich diese Prüfung auf eine Anlage mit automatischem Blockierverhinderer (ABV) und deren Einsatzpunkt, sowie auf die Bremsenunrundheit. Diese Prüfungen müssen sowohl an der angetriebenen Achse wie auch an der nicht angetriebenen Achse mit der Feststellbremse durchgeführt werden. Dabei werden bei der Bremsprüfung an einer angetriebenen Achse vor allem die Funktionen der Laufrollen 11 bis 14 und der Schwungmassen 21, 23 ausgenutzt, wobei die erste Kupplung 18 beim Vorgang des Hochfahrens mit eingeschaltet ist. Während dieser Bremsenprüfung an der nicht angetriebenen Achse und der Feststellbremse muß dabei zusätzlich die zweite Kupplung 25 eingeschaltet werden, so daß beim Hochfahren das Motoraggregat 24 den Antrieb übernehmen kann.
4. Abgas-Sonder-Untersuchung (ASU):
   Bei dieser Prüfung wird der Rollenprüfstand 10 in einem kleinen Leistungsbereich betrieben, wobei beispielsweise 7,5 KW und 50 km/h vorgesehen sind. Bei dieser Prüfung, bei der Messungen nur mit der Antriebsachse erforderlich sind, werden die Funktionen der Laufrollen 11 bis 14 mit ihren zugehörigen Drehzahlgebern, der beiden Schwungmassen 21, 23 sowie die erste (18) und die zweite Kupplung 25 benutzt. Bei eingeschalteter, zweiter Kupplung 25 wird das Motoraggregat 24 bei dieser Prüfung als Generator benutzt.
   Anstelle der Funktion des Motoraggregats 24 als Generator kann alternativ auch über die dritte Kupplung 26 die Bremseinrichtung 27 angekoppelt werden und mit deren Hilfe die Abgas-Sonder-Untersuchung (ASU) durchgeführt werden.
5. Diesel-Sonder-Untersuchung (DSU):
   Bei dieser statischen Prüfung unter Vollast werden die gleichen Bauelemente benötigt wie bei der statischen Radleistungsmessung nach Punkt 2. Es sind daher die beiden Laufrollen 11, 12 über die erste Kupplung 18 miteinander gekoppelt und über die eingeschaltete dritte Kupplung 26 die Schwungmassen 21, 23 mit Hilfe der Bremseinrichtung 27 abbremsbar. Diese DSU ist nur für die Antriebsachse erforderlich.

Die unter den Punkten 1. bis 5. aufgeführten Prüfmöglichkeiten sind am Rollenprüfstand 10 durchführbar, wodurch eine kombinierte, dynamische Leistungs-Bremsenprüfung dann etwa folgendermaßen ablaufen könnte:
Für eine Leistungsprüfung mit Geschwindigkeiten von V > 100 km/h wird das zu prüfende Fahrzeug mit seiner angetriebenen Achse auf dem Rollenprüfstand 10 voll beschleunigend im direkten Gang bis über die Nenndrehzahl hochgefahren. Bei freiem Auslauf bis unter die Nenndrehzahl wird dabei die Rad-Motor-Leistung nach dem eingangs erwähnten dynamisch arbeitenden Meßprinzip nach DE-AS 25 40 514 ermittelt.

Anschließend wird die Bremsenprüfung bei Geschwindigkeiten von V < 100 km/h durchgeführt. Dabei wird im mittleren Geschwindigkeitsbereich sofort anschließend an die Leistungsprüfung die erste Kupplung 18 geöffnet, so daß nach dem Betätigen des Bremspedals im zu prüfenden Kraftfahrzeug die Einzelrad-Bremsmessung durchführbar ist. Dabei erfolgt über die Drehzahlsensoren 31 bis 34 an jeder einzelnen Laufrolle 11 bis 14 die zugehörige Drehzahlmessung für jedes einzelne Rad der zu prüfenden Achse, so daß die Messung bzw. Berechnung der Verzögerung in Meter/Sekunde², die Bremskraft in N, und/oder die Bremsleistung in kW nach dem eingangs erwähnten dynamischen Meßprinzip durchführbar ist.

Bei dieser Bremsenprüfung im mittleren Geschwindigkeitsbereich ist zu berücksichtigen, ob die Antriebsachse ohne ABV oder mit ABV ausgerüstet ist. Bei einer Antriebsachse ohne ABV wird der Pedaldruck am Bremspedal in Abhängigkeit eines Drehzahl-Schlupf-Meß- und Anzeigegeräts abhängig von der Messung der Rollendrehzahlen gesteuert. Andererseits wird bei einer Antriebsachse mit ABV am Bremspedal mit vollem Pedaldruck gearbeitet; die Funktion des ABV wird dabei über die Drehzahl-Schlupf-Messung geprüft.

Weiterhin ist bei dieser Bremsenprüfung im mittleren Geschwindigkeitsbereich zu berücksichtigen, daß bei der Prüfung einer nicht angetriebenen Achse bzw. einer Handbremse ohne ABV die Prüfung im wesentlichen wie bei einer Antriebsachse ohne ABV verläuft, wobei jedoch zuvor aus dem Stillstand die komplette Achse über die zweite Kupplung 25 mit dem Motoraggregat 24 auf ca. 100 km/h hochgeschleppt werden muß. Andererseits wird bei der Prüfung einer nicht angetriebenen Achse bzw. Handbremse mit ABV im wesentlichen wie bei einer Antriebsachse mit ABV verfahren, wobei jedoch zuvor ebenfalls aus dem Stillstand die komplette Achse über die zweite Kupplung 25 mit dem Motoraggregat 24 auf ca. 100 km/h hochgeschleppt werden muß.

Anschließend an die Bremsenprüfung im mittleren Geschwindigkeitsbereich kann sich dann eine Bremsenprüfung im unteren Geschwindigkeitsbereich anschließen bei Geschwindigkeiten von V < 10 bis 20 km/h. In diesen unteren Drehzahlbereichen ist dann die Messung der Bremsenunrundheit möglich und zusätzlich kann bei Fahrzeugen mit ABV der zugehörigen ABV-Einsatzpunkt erfaßt werden.

Unabhängig von der geschilderten dynamischen Leistungs-Bremsenprüfung kann dann zusätzlich eine statische Radleistungsmessung durchgeführt werden, wobei dann die unter Punkt 2. näher angegebenen Bauelemente beim Prüfen der angetriebenen Achse in Funktion sind. Dabei kommt dann das andere Meßprinzip zum Tragen, wobei mit Hilfe der Bremseinrichtung 27 und der zugehörigen Meßeinrichtung 28 das jeweilige Drehmoment erfaßt wird und davon abhängig im Steuergerät 35 die Leistung ermittelt und schließlich angezeigt wird.

Im Zusammenhang mit der statischen Radleistungsmessung kann der Rollenprüfstand 10 in einem kleinen Leistungsbereich betrieben werden, wobei die Leistung kleiner als ca. 10 kW beträgt. Insbesondere kann für den ASU II-Vorschlag der Rollenprüfstand 10 mit 7,5 kW bei 50 km/h betrieben werden, wobei entweder über die zweite Kupplung 25 das Motoraggregat 24 als Generator betrieben wird oder alternativ dazu die Bremseinrichtung 27 benutzt wird.

Die statische Radleistungsmessung kann auch in einem großen Leistungsbereich benötigt werden, insbesondere für die Diesel-Sonder-Untersuchung (DSU), wobei die Leistung bis ca. 200 kW betragen kann. Bei dieser Prüfung wird über die betätigte Kupplung 26 die Bremseinrichtung 27 zugeschaltet und mit Hilfe der Meßeinrichtung 28 die Leistung ermittelt.

Mit vorliegendem Rollenprüfstand 10 können somit anhand eines einzigen Rollensatzes kombinierte Prüfungen durchgeführt werden, für die zuvor drei Einzelprüfstände verwendet wurden. Weiterhin können ABS/ABV-Fahrzeuge geprüft werden. Ferner ist eine dynamische Prüfung von Fahrzeugbremsanlagen bei hohen Geschwindigkeiten möglich.

## Patentansprüche

1. Rollenprüfstand zur kombinierten Leistungs- und Bremsenprüfung an Kraftfahrzeugen, mit einem ersten und einem zweiten Laufrollenpaar, welche die Räder einer Achse des Kraftfahrzeuges abstützen und mit einer ersten Kupplung, die zwischen die gleichachsig zueinander liegenden ersten Laufrollen beider Laufrollenpaare geschaltet ist, mit jeweils einer, jeder ersten Laufrolle zugeordneten und fest mit dieser verbundenen Schwungmasse, mit Drehzahlsensoren für jede erste Laufrolle sowie mit einem Motoraggregat zum Antrieb der Laufrollen und mit je einem zusätzlichen Drehzahlsensor für jedes Laufrollenpaar sowie mit Mitteln zum Steuern des Rollenprüfstandes und zur Verarbeitung und Anzeige von Signalen, dadurch gekennzeichnet, daß das Motoraggregat (24) über eine zweite Kupplung (25) an die erste Laufrolle (11) eines Laufrollenpaares (16) und daß eine Bremseinrichtung (27) über eine dritte Kupplung (26) an die erste Laufrolle (12) des anderen Laufrollenpaares (17) anschließbar sind und daß die zusätzlichen Drehzahlsensoren (33, 34) den beiden zweiten Laufrollen (13, 14) zugeordnet sind.

2. Rollenprüfstand nach Anspruch 1, dadurch gekennzeichnet, daß der Bremseinrichtung (27) eine Drehmoment-Meßeinrichtung (28) zugeordnet ist.

3. Rollenprüfstand nach Anspruch 1 oder 2, dadurch gekennzeichnet, daß das Motoraggregat (24) zugleich als Generator betreibbar ist.

4. Rollenprüfstand nach Anspruch 1, dadurch gekennzeichnet, daß die beiden ersten Laufrollen (11, 12) zwischen den beiden Schwungmassen (21, 23) angeordnet sind und zwischen ihnen die erste, schaltbare Kupplung (18) liegt.

5. Rollenprüfstand nach einem der Ansprüche 1 bis 4, dadurch gekennzeichnet, daß die Bremseinrichtung (27) und das Motoraggregat (24) außerhalb der Schwungmassen (23, 21) an entgegengesetzt liegenden Stirnseiten der beiden Laufrollenpaare (17, 16) angeordnet sind.

6. Rollenprüfstand nach einem der Ansprüche 1 bis 5, dadurch gekennzeichnet, daß an jeder der vier Laufrollen (11, 12, 13, 14) ein Drehzahlsensor (31, 32, 33, 34) angeordnet ist.

7. Verfahren zur Messung und Aufzeichnung von Betriebsparametern eines Kraftfahrzeuges, das mit beiden Rädern einer Achse in einem Rollenprüfstand nach einem der Ansprüche 1 bis 6 steht, dadurch gekennzeichnet, daß zur dynamischen Motor-Rad-Leistungsmessung bei eingeschalteter erster Kupplung (18) und abgeschalteter zweiter und dritter Kupplung (25, 26) der Motor über Nenndrehzahl auf maximale Leistung gebracht wird und nach freiem Auslauf bis unter Nenndrehzahl die Leistung aus den Drehzahlen der Laufrollen (11 - 14) und den davon abgeleiteten und mit den bewegten Massen (21, 23) in Bezug gesetzten Größen gewonnen wird.

8. Verfahren zur Messung und Aufzeichnung von Betriebsparametern eines Kraftfahrzeuges, das mit beiden Rädern einer Achse in einem Rollenprüfstand nach einem der Ansprüche 1 bis 6 steht, dadurch gekennzeichnet, daß zur statischen Radleistungsmessung bei eingeschalteter ersten und dritten Kupplung (18, 26) sowie bei abgeschalteter zweiter Kupplung (25) der Fahrzeugmotor in Betrieb gesetzt ist und daß durch anschließendes Betätigen der Bremseinrichtung (27) über die abgegriffenen Signale von der Drehmoment-Meßeinrichtung (28) die Leistung ermittelt wird.

9. Verfahren zur Messung und Aufzeichnung von Betriebsparametern eines Kraftfahrzeuges, das mit beiden Rädern einer Achse in einem Rollenprüfstand nach einem der Ansprüche 1 bis 6 steht, dadurch gekennzeichnet, daß zum Überprüfen der Bremsen der Kfz-Räder bei eingeschalteten erster (18) und abgeschalteter zweiter (25) und dritter Kupplung (26) ein mittlerer Geschwindigkeitsbereich angefahren wird, worauf nach dem Öffnen der ersten Kupplung die Bremsen der einzelnen Räder betätigt und aus der jeweiligen Drehzahlmessung für jedes einzelne Rad die Messung bzw. Berechnung der Verzögerung und/oder der Bremskraft und/oder der Bremsleistung vorgenommen wird.

10. Verfahren nach Anpruch 9, dadurch gekennzeichnet, daß beim Prüfen der Bremse einer nicht angetriebenen Achse eines Kraftfahrzeugs das Hochfahren in den mittleren Geschwindigkeitsbereich bei eingeschalteter zweiter Kupplung (25) durch das Motoraggregat (24) vorgenommen wird.

11. Verfahren anch Anspruch 9, dadurch gekennzeichnet, daß in einem unteren Drehzahlbereich bei Geschwindigkeiten unterhalb von ca. 10 - 20 km/h die Messung der Bremsenunrundheit und/oder die Erfassung eines Einsatzpunktes eines automatischen Blockierverhinderers (ABV) vorgenommen wird.

12. Verfahren zur Messung und Aufzeichnung von Betriebsparametern eines Kraftfahrzeugs, das mit beiden Rädern einer Achse in einem Rollenprüfstand nach einem der Ansprüche 1 bis 6 steht, dadurch gekennzeichnet, daß zur Durchführung einer Abgas-Sonder-Untersuchung (ASU) der Rollenprüfstand bei kleinem Leistungsbereich unter ca. 10 kw insbesondere 7,5 kW und 50 km/h betrieben wird, wobei mittels eingeschalteter, zweiter Kupplung (26) die Bremseinrichtung (27) angekuppelt wird.

13. Verfahren zur Messung und Aufzeichnung von Betriebsparametern eines Kraftfahrzeuges, das mit beiden Rädern einer Achse in einem Rollenprüfstand nach einem der Ansprüche 1 bis 6 steht, dadurch gekennzeichnet, daß zur Durchführung einer Diesel Sonder-Untersuchung (DSU) im großen Leistungsbereich, insbesondere bis ca. 200 kW, bei abgeschalteter zweiter Kupplung (25) und eingeschalteter dritter Kupplung (26) die Bremseinrichtung (27) angekuppelt wird.

## Claims

1. Roller-type test stand for combined testing of power and brakes of motor vehicles, having a first and a second pair of running rollers, which support the wheels of an axle of the motor vehicle, and having a first clutch, which is connected between the mutually coaxial first running rollers of the two pairs of running rollers, having in each case a centrifugal mass, assigned to each first running roller and firmly connected to the latter, having speed sensors for each first running roller and also having a motor unit for driving the running rollers and having in each case an additional speed sensor for each pair of running rollers as well as having means for controlling the roller-type test stand and for processing and displaying signals, characterized in that the motor unit (24) can be connected by means of a second clutch (25) to the first running roller (11) of a pair of running rollers (16) and in that a braking device (27) can be connected by means of a third clutch (26) to the first running roller (12) of the other pair of running rollers (17) and in that the additional speed sensors (33, 34) are assigned to the two second running rollers (13, 14).

2. Roller-type test stand according to Claim 1, characterized in that the braking device (27) is assigned a torque-measuring device (28).

3. Roller-type test stand according to Claim 1 or 2, characterized in that the motor unit (24) can at the same time be operated as a generator.

4. Roller-type test stand according to Claim 1, characterized in that the two first running rollers (11, 12) are arranged between the two centrifugal masses (21, 23) and between them lies the first clutch (18).

5. Roller-type test stand according to one of Claims 1 to 4, characterized in that the braking device (27) and the motor unit (24) are arranged outside the centrifugal masses (23, 21) at opposite end faces of the two pairs of running rollers (17, 16).

6. Roller-type test stand according to one of Claims 1 to 5, characterized in that a speed sensor (31, 32, 33, 34) is arranged at each of the four running rollers (11, 12, 13, 14).

7. Method of measuring and recording operating parameters of a motor vehicle which is standing with both wheels of an axle in a roller-type test stand according to one of Claims 1 to 6, characterized in that, for dynamically measuring the engine-wheel performance, with the first clutch (18) engaged and the second and third clutches (25, 26) disengaged, the engine is brought via nominal speed up to maximum power and, after running freely down to below nominal speed, the power is obtained from the speeds of the running rollers (11-14) and the variables derived therefrom and set in relation to the moved masses (21, 23).

8. Method of measuring and recording operating parameters of a motor vehicle which is standing with both wheels of an axle in a roller-type test stand according to one of Claims 1 to 6, characterized in that, for statically measuring the wheel power, with the first and third clutches (18, 26) engaged and the second clutch (25) disengaged, the vehicle engine is put into operation and in that, by subsequent actuation of the braking device (27), the power is determined by the torque measuring device (28) by using the signals picked up.

9. Method of measuring and recording operating parameters of a motor vehicle which is standing with both wheels of an axle in a roller-type test stand according to one of Claims 1 to 6, characterized in that, for checking the brakes of the motor vehicle wheels, with the first clutch (18) engaged and the second and third clutches (25, 26) disengaged, a moderate speed range is run to, whereupon, after opening the first clutch, the brakes of the individual wheels are actuated and the measurement or calculation of the deceleration and/or of the braking force and/or of the braking power is performed from the respective speed measurement for each individual wheel.

10. Method according to Claim 9, characterized in that, when testing the brakes of a non-driven axle of a motor vehicle, the running up to the moderate speed range is performed by the motor unit (24) with the second clutch (25) engaged.

11. Method according to Claim 9, characterized in that, in a lower speed range at speeds below about 10-20 km/h, the measurement of the brake eccentricity and/or the sensing of an operating point of an automatic anti-blocking device is performed.

12. Method of measuring and recording operating parameters of a motor vehicle which is standing with both wheels of an axle in a roller-type test stand according to one of Claims 1 to 6, characterized in that, for carrying out an exhaust-emission check, the roller-type test stand is operated in a low power range below about 10 kw, in particular 7.5 kw and 50 km/h, the braking device (27) being coupled by means of the engaged second clutch (26).

13. Method of measuring and recording operating parameters of a motor vehicle which is standing with both wheels of an axle in a roller-type test stand according to one of Claims 1 to 6, characterized in that, for carrying out a diesel emission check, the braking device (27) is coupled in the high power range, in particular up to about 200 kw, with the second clutch (25) disengaged and the third clutch (26) engaged.

## Revendications

1. Banc d'essai à rouleaux pour l'essai combiné de la puissance et du freinage d'un véhicule automobile, comportant une première et une seconde paires de rouleaux de roulement soutenant les roues d'un essieu du véhicule ainsi qu'un premier embrayage entre les premières roues de roulement coaxiales des deux paires de rouleaux de roulement, avec chaque fois une masse d'inertie associée solidairement au premier rouleau de roulement, des capteurs de vitesse de rotation pour le premier rouleau de roulement ainsi qu'un groupe moteur pour l'entraînement des rouleaux de roulement et un capteur supplémentaire de vitesse de rotation pour chaque paire de rouleaux de roulement, ainsi que des moyens pour commander le banc d'essai à rouleaux et pour le traitement et l'affichage des signaux, banc d'essai caractérisé en ce que le groupe moteur (24) peut être relié par un second embrayage (25) au premier rouleau de roulement (11) d'une paire de rouleaux de roulement (16), et une installation de freinage (27) peut être reliée par un troisième embrayage (26) au premier rouleau de roulement (12) de l'autre paire de rouleaux de roulement (17), et les capteurs de vitesse de rotation (33, 34) supplémentaires sont associés aux deux seconds rouleaux de roulement (13, 14).

2. Banc d'essai à rouleaux selon la revendication 1, caractérisé en ce que l'installation de freinage (27) comporte une installation de mesure de couple (28).

3. Banc d'essai à rouleaux selon les revendications 1 ou 2, caractérisé en ce que le groupe moteur (24) peut également fonctionner en générateur.

4. Banc d'essai à rouleaux selon la revendication 1, caractérisé en ce que les deux premiers rouleaux de roulement (11, 12) sont prévus entre les deux masses d'inertie (22, 23) elles-mêmes reliées par le premier embrayage commutable (18).

5. Banc d'essai à rouleaux selon l'une des revendications 1 à 4, caractérisé en ce que l'installation de freinage (27) et le groupe moteur (24) sont prévus à l'extérieur des masses d'inertie (23, 21) sur les faces frontales opposées des deux paires de rouleaux de roulement (17, 16).

6. Banc d'essai à rouleaux selon l'une des revendications 1 à 5, caractérisé par un capteur de vitesse de rotation (31, 32, 33, 34) prévu sur chacun des quatre rouleaux de roulement (11, 12, 13, 14).

7. Procédé de mesure et d'enregistrement des paramètres de fonctionnement d'un véhicule automobile dont les deux roues d'un essieu se trouvent dans un banc d'essai à rouleaux selon l'une des revendications 1 à 6, caractérisé en ce que, pour la mesure dynamique de la puissance du moteur sur roue, lorsque le premier embrayage (18) est branché et que le second et le troisième embrayages (25, 26) sont ouverts, on met le moteur à la puissance maximale au-delà de la vitesse de rotation nominale et, après passage libre jusqu'en-dessous de la vitesse de rotation nominale, on obtient la puissance à partir des vitesses de rotation des rouleaux de roulement (11-14) et des masses déviées et entraînées (21, 22) par rapport aux grandeurs posées.

8. Procédé de mesure et d'enregistrement des paramètres de fonctionnement d'un véhicule automobile dont les deux roues d'un essieu se trouvent dans un banc d'essai à rouleaux selon l'une des revendications 1 à 6, caractérisé en ce que pour la mesure statique de puissance de roue lorsque le premier et le troisième embrayage (18, 28) sont fermés et que le second embrayage (25) est coupé, on met en route le moteur du véhicule et, en actionnant alors l'installation de freinage (27), on détermine la puissance à partir des signaux détectés par l'installation de mesure de couple (28).

9. Procédé de mesure et d'enregistrement des paramètres de fonctionnement d'un véhicule automobile dont les deux roues d'un essieu se trouvent dans un banc d'essai à rouleaux selon l'une des revendications 1 à 6, caractérisé en ce que pour contrôler les freins des roues d'un véhicule automobile lorsque le premier embrayage (18) est fermé tandis que le second et le troisième embrayage (25, 26) sont ouverts, on se place dans une plage de vitesses moyennes et, après ouverture du premier embrayage, on actionne les freins des différentes roues et, à partir de la mesure respective de la vitesse de rotation de chaque roue, on mesure ou on calcule la décélération et/ou la force de freinage et/ou la puissance de freinage.

10. Procédé selon la revendication 9, caractérisé en ce que, pour le contrôle des freins d'un essieu non moteur d'un véhicule, on monte en vitesse dans la plage des vitesses moyennes, le second embrayage (25) étant mis en oeuvre par le groupe moteur (24).

11. Procédé selon la revendication 9, caractérisé en ce que, dans une plage de faibles vitesses, pour des vitesses inférieures à environ 10 - 20 km/h, on mesure la régularité du freinage et/ou on saisit un point de mise en oeuvre d'un moyen antiblocage automatique (ABV).

12. Procédé de mesure et d'enregistrement des paramètres de fonctionnement d'un véhicule automobile dont les deux roues d'un essieu se trouvent dans un banc d'essai à rouleaux selon l'une des revendications 1 à 6, caractérisé en ce que, pour effectuer un essai particulier de gaz d'échappement (ASU), on fait fonctionner le banc d'essai à rouleaux dans une faible plage de puissances en-dessous d'environ 10 kW, notamment à 7,5 kW et 50 km/h, l'installation de freinage (27) étant branchée pendant que le second embrayage (26) est branché.

13. Procédé de mesure et d'enregistrement des paramètres de fonctionnement d'un véhicule automobile dont deux roues d'un essieu se trouvent dans un banc d'essai à rouleaux selon l'une des revendications 1 à 6, caractérisé en ce que pour effectuer un essai particulier de moteur Diesel (DSU) dans une plage de puissances importantes, notamment jusqu'à environ 200 kW, on branche l'installation de freinage (27), le second embrayage (25) étant débrayé et le troisième embrayage (26) étant embrayé.
